# EUROPÄISCHE PATENTSCHRIFT

(11) **EP 1 184 698 B1**
(45) Veröffentlichungstag und Bekanntmachung des Hinweises auf die Patenterteilung: **14.12.2005**
(21) Anmeldenummer: 00401342.1
(22) Anmeldetag: 16.05.2000
(51) Int. Cl.: G02B 6/44

(54) **Optisches Kabel**
Optical cable
Câble optique

(43) Veröffentlichungstag der Anmeldung: 06.03.2002
(73) Patentinhaber: Nexans, 75008 Paris (FR)
(72) Erfinder: Warden, Gert, Dipl.-Ing., 41199 Mönchengladbach (DE); Mertens, Hildegard, 41239 Mönchengladbach (DE)
(74) Vertreter: Döring, Roger

(56) Entgegenhaltungen:
- DE-A- 2 948 896
- DE-A- 3 419 801
- DE-A- 4 336 643
- US-A- 5 109 456
- PATENT ABSTRACTS OF JAPAN vol. 012, no. 199 (P-714), 9. Juni 1988 (1988-06-09) & JP 63 002009 A (AGENCY OF IND SCIENCE & TECHNOL), 7. Januar 1988 (1988-01-07)
- PATENT ABSTRACTS OF JAPAN vol. 015, no. 418 (P-1266), 23. Oktober 1991 (1991-10-23) & JP 03 171003 A (FURUKAWA ELECTRIC CO LTD:THE), 24. Juli 1991 (1991-07-24)

## Beschreibung

Die Erfindung bezieht sich auf ein optisches Kabel, das mindestens zwei aus Kunststoff bestehende Lichtwellenleiter aufweist, die von einem gemeinsamen Mantel aus Isoliermaterial umgeben sind (DE 43 36 643 A1).

Lichtwellenleiter - im folgenden kurz "LWL" genannt - aus Glas oder Kunststoff werden in der Nachrichtentechnik zur Übertragung von Signalen in immer stärkerem Maße anstelle von metallischen Leitern eingesetzt. Dabei werden aus Glas bestehende LWL überwiegend für längere Übertragungsstrecken von beispielsweise mehr als 2 km verwendet. Aus Kunststoff bestehende LWL sind besonders für kürzere Übertragungsstrecken geeignet. Als Materialien für diese LWL werden beispielsweise Polymere eingesetzt, wie Polymethylmetacrylat oder Polycarbonat. Beide Arten von LWL sind mechanisch empfindlich. Sie müssen insbesondere gegen radial einwirkende Kräfte und gegen Biegen um zu kleine Radien geschützt werden.

In der eingangs erwähnten DE 43 36 643 A1 ist ein optisches Kabel mit zwei aus Kunststoff bestehenden LWL beschrieben, die in einer Schutzhülle angeordnet sind. Die Schutzhülle besteht aus einem zum Rohr geformten Metallband und einer auf das Rohr außen aufgebrachten polymeren Mantelschicht. Die LWL sollen so gegen Feuchtigkeit und aggressive Medien sowie gegen höhere Temperaturen geschützt sein. Wenn ein solches Kabel als flexibles Kabel beispielsweise in Schleppketten immer wieder gebogen und gestreckt wird, können die LWL schnell "blind" werden. Sie sind dann für eine Signalübertragung nicht mehr brauchbar.

Der Erfindung liegt die Aufgabe zugrunde, das eingangs geschilderte optische Kabel so zu gestalten, daß es seine Funktion auch bei oftmaligem Biegen und Strecken beibehält.

Diese Aufgabe wird gemäß der Erfindung dadurch gelöst,
- daß die LWL mit kurzer Schlaglänge miteinander verseilt sind, die kleiner als das Sechsfache des Durchmessers eines LWLs ist,
- daß um die miteinander verseilten LWL mindestens zwei Lagen von aus Isoliermaterial bestehenden, zugfesten Fäden herum verseilt sind und
- daß der Mantel über den zugfesten Fäden angeordnet ist.

Allein durch die kurze Schlaglänge, mit welcher die LWL miteinander verseilt sind, ist das optische Kabel insgesamt sehr gut vielfach biegbar und streckbar, wobei die Übertragungseigenschaften der LWL lange Zeit nahezu unverändert bleiben. Durch die zusätzliche Anbringung der mindestens zwei Verseillagen aus zugfesten Fäden über den miteinander verseilten LWL ist insgesamt ein optisches Kabel mit aus Kunststoff bestehenden LWL geschaffen, das seine Übertragur seigenschaften ohne Einschränkungen unbegrenzt beibehält, auch wenn es - beispielsweise beim Einsatz in einer Schleppkette - in ständigem Wechsel gebogen und gestreckt wird.

Vorteilhafte Ausgestaltungen der Erfindung gehen aus den Unteransprüchen hervor.

Ausführungsbeispiele des Erfindungsgegenstandes sind in den Zeichnungen dargestellt.

Es zeigen:
Fig. 1 in schematischer Darstellung eine Seitenansicht eines Kabels nach der Erfindung mit teilweise entfernten Schichten.
Fig. 2 einen Schnitt durch Fig. 1 längs der Linie II - II in vergrößerter Darstellung.
Fig. 3 einen Schnitt durch eine gegenüber den Fig. 1 und 2 ergänzte Ausführungsform des Kabels.

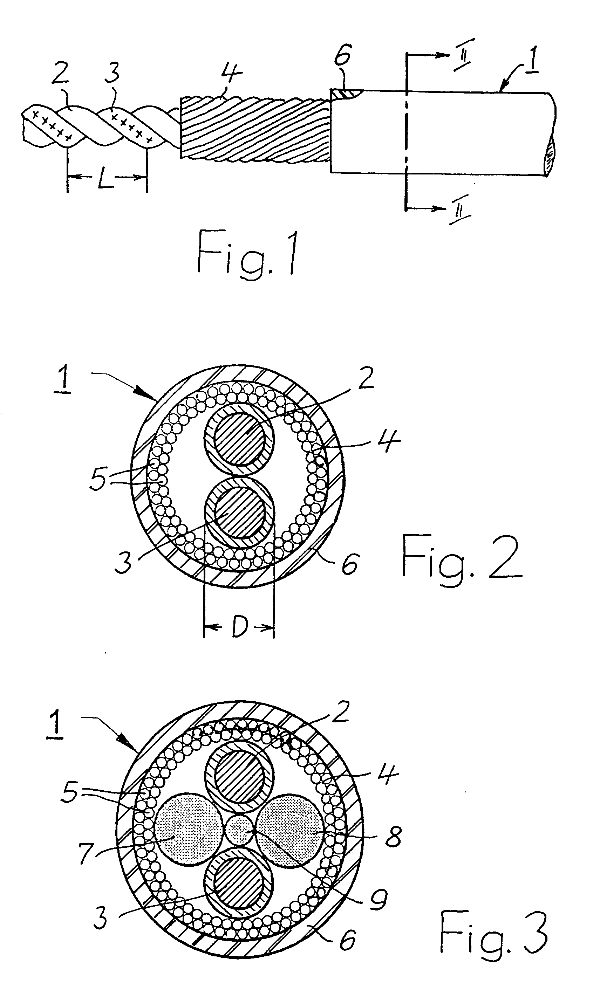

Das in den Fig. 1 bis 3 dargestellte optische Kabel 1 hat zwei aus Kunststoff bestehende LWL 2 und 3, die miteinander verseilt sind. Für die Verseilung ist eine kurze Schlaglänge L vorgesehen, die kleiner als das Sechsfache des Durchmessers D eines der mit einer aus den Fig. 2 und 3 ersichtlichen Schutzschicht versehenen LWL 2 und 3 ist. Die Schlaglänge L ist dabei die Strecke, nach deren Zurücklegung der jeweilige LWL in Umfangsrichtung des Verseilverbundes gesehen wieder an der gleichen Stelle liegt. Um die LWL 2 und 3 herum ist eine Schicht 4 angebracht, die entsprechend Fig. 2 und 3 aus zwei Lagen zugfester, aus Kunststoff bestehender Fäden 5 aufgebaut ist, welche um die LWL 2 und 3 herum verseilt sind. Die Fäden 5 bestehen beispielsweise aus Aramid. Die Schlagrichtung der Verseilung ist in beiden aus Fäden 5 bestehenden Lagen die gleiche. Die Schicht 4 besteht aus mindestens zwei Lagen mit Fäden 5. Es können auch mehr Lagen sein.

Über der Schicht 4 ist ein aus Kunststoff, beispielsweise aus Polyvinylchlorid bestehender Mantel 6 angeordnet. Er ist beispielsweise durch Extrusion auf die Fäden 5 der Schicht 4 aufgebracht. Deren beide Lagen umschließen die LWL 2 und 3 so dicht, daß das Material des Mantels 6 nicht hindurchdringen kann. Die Beweglichkeit der LWL 2 und 3 innerhalb der Schicht 4 wird also nicht behindert.

Wenn im Kabel 1 entsprechend der dargestellten Ausführungsform nur zwei LWL 2 und 3 vorhanden sind, dann werden dieselben zweckmäßig zusammen mit zwei Kordeln 7 und 8 aus Kunststoff verseilt, die den gleichen Durchmesser D wie die LWL 2 und 3 haben. Die Kordeln 7 und 8 bestehen beispielsweise aus Polypropylen. Es ergibt sich dann gemäß Fig. 3 für das Kabel 1 insgesamt ein etwa kreisförmiger Querschnitt. Bei einem Kabel 1 mit drei LWL wäre im Sinne eines kreisförmigen Querschnitts nur eine solche Kordel erforderlich. Bei mehr als drei LWL wird grundsätzlich keine Kordel benötigt.

Zur weiteren Verbesserung des Biegeverhaltens des Kabels 1 können die LWL 2 und 3 zusammen mit den Kordeln 7 und 8 um einen zentralen Kern 9 aus Kunststoff herum verseilt sein. Der Kern 9 besteht beispielsweise aus Polypropylen. Er kann auch zugfest ausgeführt sein.

## Patentansprüche

1. Optisches Kabel, das mindestens zwei aus Kunststoff bestehende Lichtwellenleiter aufweist, die von einem gemeinsamen Mantel aus Isoliermaterial umgeben sind,
**dadurch gekennzeichnet,**
- **daß** die Lichtwellenleiter (2,3) mit kurzer Schlaglänge (L) miteinander verseilt sind, die kleiner als das Sechsfache des Durchmessers (D) eines Lichtwellenleiters (2,3) ist,
- **daß** um die miteinander verseilten Lichtwellenleiter (2,3) mindestens zwei Lagen von aus Isoliermaterial bestehenden, zugfesten Fäden (5) herum verseilt sind und
- **daß** der Mantel (6) über den zugfesten Fäden (5) angeordnet ist.

2. Kabel nach Anspruch 1, **dadurch gekennzeichnet, daß** als zugfeste Fäden (5) Aramidfäden eingesetzt sind.

3. Kabel nach Anspruch 1 oder 2, **dadurch gekennzeichnet, daß** die zugfesten Fäden (5) in den unterschiedlichen Lagen mit gleicher Schlagrichtung verseilt sind.

4. Kabel nach einem der Ansprüche 1 bis 3, **dadurch gekennzeichnet, daß** die Lichtwellenleiter (2,3) zur Erzielung eines etwa kreisförmigen Querschnitts des Kabels (1) gegebenenfalls zusammen mit mindestens einer Kordel (7,8) aus Kunststoff verseilt sind, deren Durchmesser dem Durchmesser (D) der Lichtwellenleiter (2,3) entspricht.

5. Kabel nach einem der Ansprüche 1 bis 4, **dadurch gekennzeichnet, daß** Lichtwellenleiter (2,3) und Kordeln (7,8) um einen zentralen Kern (9) aus Kunststoff herum verseilt sind.

6. Kabel nach einem der Ansprüche 1 bis 5, **dadurch gekennzeichnet, daß** der zentrale Kern (9) zugfest ausgeführt ist.

## Claims

1. Optical cable which has at least two optical waveguides consisting of plastic which are surrounded by a common cladding made from insulating material,
**characterized**
- **in that** the optical waveguides (2, 3) are stranded with one another with a short lay length (L) which is shorter than six times the diameter (D) of an optical waveguide (2, 3),
- **in that** at least two layers of fibres (5) of high tensile strength and consisting of insulating material are stranded around the optical waveguides (2, 3) stranded with one another, and
- **in that** the cladding (6) is arranged over the fibres (5) of high tensile strength.

2. Cable according to Claim 1, **characterized in that** aramid fibres are used as fibres (5) of high tensile strength.

3. Cable according to Claim 1 or 2, **characterized in that** the fibres (5) of high tensile strength are stranded in the different layers with the same direction of lay.

4. Cable according to one of Claims 1 to 3, **characterized in that** the optical waveguides (2, 3) are stranded in order to achieve an approximately circular cross section of the cable (1), if appropriate together with at least one plastic cord (7, 8) whose diameter corresponds to the diameter (D) of the optical waveguides (2, 3).

5. Cable according to one of Claims 1 to 4, **characterized in that** optical waveguides (2, 3) and cords (7, 8) are stranded around a central plastic core (9).

6. Cable according to one of Claims 1 to 5, **characterized in that** the design of the central core (9) is of high tensile strength.

## Revendications

1. Câble optique qui présente au moins deux guides d'ondes lumineuses constitués de matière synthétique qui sont entourés par une enveloppe commune en matériau isolant, **caractérisé**
- **en ce que** les guides d'ondes lumineuses (2, 3) sont torsadés ensemble à un petit pas de torsade (L) qui est inférieur au sextuple du diamètre (D) d'un guide d'ondes lumineuses (2, 3),
- **en ce qu'**au moins deux couches de fils (5) constitués de matériau isolant, résistant à la traction, sont torsadés autour des guides d'ondes lumineuses (2, 3) torsadés ensemble et
- **en ce que** l'enveloppe (6) est disposée au-dessus des fils (5) résistant à la traction.

2. Câble selon la revendication 1, **caractérisé en ce que** des fils en aramide sont utilisés comme fils (5) résistant à la traction.

3. Câble selon la revendication 1 ou 2, **caractérisé en ce que** les fils (5) résistant à la traction sont torsadés dans le même sens de torsadage dans les différentes couches.

4. Câble selon une des revendications 1 à 3, **caractérisé en ce que**, pour arriver à une section transversale approximativement circulaire du câble (1), les guides d'ondes lumineuses (2, 3) sont torsadés le cas échéant conjointement avec au moins une corde (7, 8) en matière synthétique dont le diamètre correspond au diamètre (D) des guides d'ondes lumineuses (2, 3).

5. Câble selon une des revendications 1 à 4, **caractérisé en ce que** les guides d'ondes lumineuses (2, 3) et les cordes (7, 8) sont torsadés autour d'un noyau (9) central en matière synthétique.

6. Câble selon une des revendications 1 à 5, **caractérisé en ce que** le noyau (9) central est réalisé de manière à être résistant à la traction.
